Europäisches Patentamt

European Patent Office

Office européen des brevets

(19)

(11) Veröffentlichungsnummer: **0 003 824**
**B1**

(12) **EUROPÄISCHE PATENTSCHRIFT**

(21) Anmeldenummer: **79100491.4**

(22) Anmeldetag: **20.02.79**

(51) Int. Cl.³: **C 01 G 49/06,**
**C 01 G 49/08, C 01 D 5/06**

(54) Verfahren zur Herstellung von Eisenoxidpigmenten und Natriumsulfat

(30) Priorität: **01.03.78 DE 2808674**

(43) Veröffentlichungstag der Anmeldung:
**05.09.79 Patentblatt 79/18**

(45) Bekanntmachung des Hinweises auf die Patenterteilung:
**23.07.80 Patentblatt 80/15**

(84) Benannte Vertragsstaaten:
**DE FR GB IT**

(56) Entgegenhaltungen:
**DE - A - 2 612 798**
**FR - A - 2 074 056**
**US - A - 3 987 156**

(73) Patentinhaber: **Bayer AG**
**Zentralbereich Patente, Marken und Lizenzen**
**D - 5090 Leverkusen 1, Bayerwerk (DE)**

(72) Erfinder: **Rademachers, Jakob, Dr.**
**Hoeninghausstrasse 34**
**D - 4150 Krefeld - 1 (DE)**
**Pflugmacher, Ingo, Dr.**
**Asternstrasse 16**
**D - 4005 Meerbusch 3 (DE)**

Courier Press, Leamington Spa, England.

## . Verfahren zur Herstellung von Eisenoxidpigmenten und Natriumsulfat

Die Herstellung von Eisenoxidpigmenten aus Eisensulfat ist bekannt. Beispielsweise sind hierzu Verfahren in der Weise bekannt geworden, daß die wäßrige Eisensulfatlösung mit Natronlauge versetzt und entweder gleichzeitig oder anschließend eine Oxidation, beispielsweise durch Begasen mit Luft, bei erhöhter Temperatur durchgeführt wird, um anschließend die erhaltenen Eisenoxidpigment-Schlämme von der Natriumsulfatlösung durch Filtration zu trennen (C.C. DE. Witt et.a.: Pigment Grade Iron Oxides, Ind. Eng. Chem. Vol. 44, Nr. 3, S. 673—78 (1952)). Das Natriumsulfat kann durch Eindampfen zur Kristallisation gebracht werden. Eine Weiterentwicklung dieses Verfahrens besteht darin, daß durch Erhöhen der Natriumsulfatkonzentration in den filtrierten Lösungen die energetisch aufwendige Eindampfung teilweise durch Kühlen der heiß anfallenden Filtrate ersetzt werden kann. Hierdurch ist man in der Lage, etwa 60 bis 70 Gew.—% des in Lösung befindlichen Natriumsulfats ohne Aufwendung thermischer Energie zu gewinnen. Die Anreicherung der Natriumsulfatmenge in der heißen Pigmentsuspension erfolgt entweder durch Erhöhen der Ausgangskonzentrationen der Eisensulfatlösung und der Natronlauge über das übliche Maß hinaus, wobei die Gefahr der Kristallisation der Ausgangssubstanzen auftritt (US—Patentschrift 39 70 738), oder durch Rückführung der natriumSulfathaltigen Mutterlaugen, die auf Raumtemperatur abgekühlt sind und noch etwa 250 g Natriumsulfat/l enthalten (deutche Offenlegungsschrift 26 12 798).

Ein Ziel der vorliegenden Erfindung ist die Verarbeitung von Eisensulfat zu hochwertigen Eisenoxiden in Pigmentqualität und zu praktisch eisenfreiem Natriumsulfat. Ein weiteres Ziel der vorliegenden Erfindung besteht darin, hochwertige Eisenoxidpigmente und praktisch eisenfreies Natriumsulfat aus Eisensulfat-Abfallstoffen herzustellen, wie sie in wäßriger Lösung oder kristallisiert als Heptahydrat in der Stahlindustrie beim Beizen mit Schwefelsäure oder in der chemischen Industrie bei der Herstellung von Titandioxidpigmenten durch Ausschluß von Titaneisenerzen mit Schwefelsäure anfallen.

Nach der US—Patentschrift 37 06 531 wird die Erniedrigung der Natriumsulfatlöslichkeit in der von Eisenhydroxid filtrierten Lösung nicht durch Abkühlen oder Eindampfen, sondern durch Zugabe von Natronlauge bewirkt. Nachfolgend wird das feste Eisensulfatheptahydrat in die von kristallisierten Natriumsulfat befreite Natronlauge—haltige Natriumsulfatlösung gegeben. Die Eisenhydroxidbildung erfolgt bereits während des Lösevorganges, was für eine Eisenoxidpigment-Bildung sehr ungünstig ist. Die für die Pigmenqualität wichtige Steuerung der Teilchengröße ist nicht möglich, wenn nicht aus vorgegebenen Lösungen gefällt wird. Nach diesem bekannten Verfahren wird deshalb auch keine Pigmentherstellung durchgeführt, sondern die schadlose Beseitigung anfallender Eisenhydroxide erwähnt.

Die vorliegende Erfindung betrifft ein Verfahren zur Herstellung von Eisenoxidpigmenten und praktisch eisenfreiem Natriumsulfat durch Begasen von natriumalkalisch eingestellten eisensulfathaltigen Lösungen bei Temperaturen über 40°C bis etwa 100°C mit einem sauerstoffhaltigen Gas, insbesondere Luft, wobei das entstehende Eisenoxidpigment von der natriumsulfathaltigen Lösung abgetrennt wird, das dadurch gekennzeichnet ist, daß man aus der Feststoff-freien Lösung zunächst in einer Kristallisationsstufe einen Teil des Natriumsulfats auskristallisieren läßt und von der natriumsulfathaltigen Mutterlauge abtrennt, einen Teil der natriumsulfathaltigen Mutterlauge zum Lösen von festem Eisensulfathydrat verwendet und aus dem restlichen Teil der Mutterlauge durch Zugabe von Natronlauge weiteres Natriumsulfat kristallisiert und abtrennt, worauf die entstehende Natriumsulfat- und Alkali-haltige wäßrige Lösung als alkalisches Fällungsmittel für die Eisenoxidpigmentbildung eingesetzt wird.

Das erfindungsgemäße Verfahren läuft im alkalischen pH—Bereich bei pH—Werten von etwa 7 bis 14, vorzugsweise 9 bis 11 ab, wobei das Eisen vollständig als Oxid oder Hydroxid gefällt wird. Auf diesem Wege entstehen in der Regel Eisenoxidschwarzpigmente mit Magnetitstruktur der Formel $Fe_3O_4$; aber auch Goethit mit der chemischen Zusammensetzung FeOOH kann bei Einhalten von Temperaturen von etwa 60 bis 100°C und pH—Werten, die bei etwa 12 bis 14 liegen, erhalten werden. Auf diesem Wege erhaltene Eisenoxidhydroxide besitzen Nadelstruktur; sie sind von gelber bis brauner Farbe und werden bevorzugt als Ausgangsmaterial von Magnetprogrammträgern eingesetzt.

Das erfindungsgemäße Verfahren läßt sich besonders gut unter Einsatz von Eisensulfatabfallstoffen durchführen.

Das auskristallisierte Natriumsulfatdekahydrat fällt nach dem Abkühlen der vom Pigmentschlamm filtrierten Lösug in reiner, praktisch eisenfreier Form an. In der zweiten Kristallisationsstufe nach Erniedrigung der Löslichkeit des Natriumsulfats durch Zusatz von Natronlauge erhält man das reine Natriumsulfat nach zusätzlichem Waschen. In der ersten Kristallisationsstufe werden vorzugsweise 60 bis 80 Gew.—% des in beiden Kristallisationsstufen anfallenden kristallinen Natriumsulfats abgetrennt. Der Anteil der natriumsulfathaltigen Lösung, der zum Lösen des Eisensulfatheptahydrats eingesetzt wird, beträgt etwa 70 bis 90 Gew.—%.

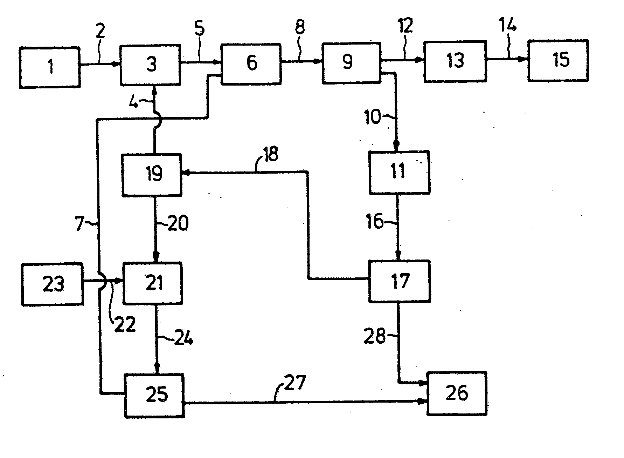

Nachfolgend wird eine Ausführungsform des erfindungsgemäßen Verfahrens anhand des in der Figur 1 dargestellten Fließschemas näher erläutert. Dabei kommt den Ziffern folgende Bedeutung zu: 1, 23 = Vorratsbehälter, 2, 4, 5, 7, 8, 10, 12, 14, 16, 18, 20, 22, 24, 27 = Leitungen, 3 = Lösebehälter, 6 = Reaktor, 9 = Filtrationsvorrichtung, 11, 21 = Kristallisationsvorrichtungen, 13 = Wäscher, 15 = Trockner, 17, 25 = Zentrifugen, 19 = Sammebehälter, 26 = Lager.

Nach der dargestellten Ausführungsform geht man von festem Eisensulfat-heptahydrat aus. Dieses gelangt vom Vorratsbehälter 1 über Leitung 2 in den Lösebehälter 3, der mit einem Rührer ausgestattet ist. Hier wird durch Zugabe eines Teils der aus der ersten Kristallisationsstufe 11 und 17 stammenden, natriumsulfthaltigen Mutterlauge aus dem Sammelbehälter 19 nach gegebenenfalls leichtem Ansäuern mit Schwefelsäure über Leitung 4 das Eisensulfat gelöst. Über Leitung 5 gelangt anschließend diese Lösung in den Reaktor 6, in dem über 7 die Alkalilösung aus der zweiten Kristallisationsstufe 21 und 25 als Fällungsmittel zugegeben wird. Die Pigmentherstellung läuft im Reaktor 6 unter Begasen mit Luft bei Temperaturen über 40 bis etwa 100°C und bei pH—Werten von 7 bis 14 ab. Für Schwarzpigmente werden bevorzugt pH—Werte von 9 bis 11 und für Gelbpigmente oder für Ausgangsprodukte für Magnetpigmente werden bevorzugt pH—Werte von 12 bis 14 eingestellt. Nach Beendigung der Pigmentbildung, die dieskontinuierlich oder kontinuierlich durchgefürt werden kann, wird die Pigmentsuspension in 9 filtriert, wobei das Filtrat über 10 in die Kühlkristallisation 11 gelangt. Der Filterkuchen wird in 13 gewaschen und in 15 getrocknet.

Das in der Kristallisationsvorrichtung 11 beim Abkühlen auf Raumtemperatur ausgeschiedene Natriumsulfatdekahydrat wird in einer Zentrifuge 17 von der Mutterlauge getrennt. Es fällt in einer Qualität an, die für die weiterverarbeitung eventuell nach Umkristallisation zu wasserfreiem Salz in der Waschmittel- oder Papierfabrikation sowie in der Textilindustrie geeignet ist.

Die Mutterlauge dieser ersten Kristallisationsstufe wird nun über Leitung 18 in den Sammelbehälter 19 gefürt. Von dort geht ein Teil zurück über 4 zum Lösebehälter 3. Ein anderer Teil (etwa 20%) wird in der Kristallisationsvorrichtung 21 mit Natronlauge aus dem Vorratsbehälter 23 versetzt. Das ausgeschiedene wasserfreie Natriumsulfat wird in 25 abgeschleudert, wobei die Mutterlauge aus dieser zweiten Kristallisationsstufe über Leitung 7 als Alkalilösung für den Pigmentherstellungsprozeß in den Reaktor 6 eingesetzt wird. Die abgeschleuderten, Natronlauge enthaltenden Kristalle werden noch auf der Zentrifuge mit Natriumsulfat-haltigem Wasser gewaschen und wie das Glaubersalz aus 17 im Lager 26 verladen.

Die einzelnen Verfahrensschritte können ohne Nachteile nach dem Stand der Technik variiert und abgewandelt werden. So ist es beispielsweise möglich, bei der Pigmentbildung im Reaktor 6 die Oxidationsreaktion mittels Luft durch die verschiedenen Arten der Begasung, wie sie aus der Fermentation oder der biologischen Abwasserreinigung bekannt sind, durchzuführen.

Die in den Apparaten 9, 17 und 25 vorgesehenen Fest-Flüssig-Trennungen können durch Betreiben von Vakuumfiltern, Drucknutschen, Zentrifugen oder anderen bekannten Einrichtungen der chemischen Verfahrenstechnik in chargenweisen oder kontinuierlichen Schritten durchgeführt werden.

Nachfolgend wird das erfindungsgemäße Verfahren beispielhaft erläutert:

400 Gewichtsteile Eisensulfat-Heptahydrat, das aus der Titandioxid-Fabrikation stammt, werden in 3 mit 950 Gewichtsteilen Mutterlauge, die 250 g $Na_2SO_4$/l enthält, gelöst. Aus dieser Lösung wird im Begasungsbehälter 6 das Eisenoxid in Form des schwarzen $Fe_3O_4$ durch Zugabe von 430 Gewichtsteilen der Alkalilösung aus 25, die 115 Gewichtsteile NaOH und 7 Gewichtsteile $Na_2SO_4$ enthält, bei feinteiliger Luftbegasung gefällt. Die Reaktionstemperatur wird auf 70°C gehalten. Es stellt sich ein pH—Wert von 9 bis 10 ein. Nach Beendigung der Reaktion erkenntlich am Eisen(II)-zu Eisen(III)-Verhältnis, das bei 1:1,9 liegen soll, wird das gebildete $Fe_3O_4$ auf einem Vakuumdrehfilter 9 filtriert, in 13 nochmals aufgeschlämmt und gewaschen und in 15 getrocknet. Nach dem Mahlen werden 100 Gewichtsteile eines farbstarken und tiefschwarzen Eisenoxidpigmentes erhalten, das zum Einfärben sowohl in der Lack- als auch in der Bau-Industrie geeignet ist.

Das in 9 angefallene Filtrat enthält 380 g $Na_2SO_4$/l. Es wird in 11 durch Vakuumkühlung auf 25°C abgekühlt, wobei 330 Gewichtsteile $Na_2SO_4 \cdot 10\,H_2O$ auskristallisieren, die in der Zentrifuge 17 abgeschleudert werden. Die hierbei gewonnenen Kristalle sind reinweiß. Der Eisenanteil liegt unterhalb 0,005 Gew.—%, der $Na_2SO_4$-Gehalt bei 38 Gew.—%.

Während 950 Gewichtsteile der erhaltenen Mutterlauge zum Lösen neuen Eisensulfats im Rührbehälter 3 verwendet werden, gelangen 250 Gewichtsteile in die zweite Kristallisationsstufe 21, wo sie mit 235 Gewichtsteilen einer 50 %igen Natronlauge versetzt werden. Hierbei fallen 55 Gewichtsteile $Na_2SO_4$-Kristalle an, die nach dem Abschleudern noch 2 Gewichtsteile NaOH und 5 Gewichtsteile Haftwasser enthalten. Nach dem Waschen mit $Na_2SO_4$-haltigem Wasser erhält man ein NaOH-freies, reines Endprodukt.

**Patentanspruch**

Verfahren zur Herstellung von Eisenoxidpigmenten und praktisch eisenfreiem Natriumsulfat durch Begasen von natriumalkalisch eingestellten eisensulfathaltigen Lösungen bei Temperaturen über 40°C bis etwa 100°C mit einem sauerstoffhaltigen Gas, insbesondere Luft, wobei das entstehende Eisenoxidpigment von der natriumsulfathaltigen Lösung abgetrennt wird, dadurch gekennzeichnet, daß man aus der Feststoff-freien Lösung zunächst in einer Kristallisationsstufe einen Teil des Natriumsulfats als Natriumsulfatdekahydrat auskristallisieren läßt und von der natriumsulfathaligen Mutterlauge abtrennt, einen Teil der natriumsulfathaltigen Mutterlauge zum Lösen von festem Eisensulfathephtahydrat verwendet und aus dem restlichen Teil der Mutterlauge durch Zugabe von Natronlauge weiteres Natriumsulfatdekahydrat kristallisiert und abtrennt, worauf die entstehende Natriumsulfat-und Alkali-haltige wäßrige Lösung als alkalisches Fällungsmittel für die Eisenoxidpigmentbildung eingesetzt wird.

## Revendication

Procédé de production de pigments à l'oxyde de fer et de sulfat de sodium pratiquement dépourvu de fer, par traitement de solutions contenant du sulfate de fer, alcalinisées au sodium, à des températures de plus de 40°C à environ 100°C avec un gaz contenant de l'oxygène, notamment l'air, le pigment à l'oxyde de fer produit étant séparé de la solution contenant du sulfate de sodium, caractérisé par le fait qu'on fait cristalliser tout d'abord dans une étape de cristallisation une partie du sulfate de sodium sous la forme de sulfate de sodium décahydraté dans la solution débarassée des matières solides et on le sépare de la liqueur-mère contenant le sulfate de sodium, on utilise une partie de la liqueur-mère contenant du sulfate de sodium pour dissoudre le sulfate de fer heptahydraté solide et on fait encore cristalliser dans la partie restante de la liqueur-mère, par addition de lessive de soude, du sulfate de sodium décahydraté que l'on sépare, après quoi on utilise la solution aqueuse produite, contenant du sulfate de sodium et de la base alcaline, comme précipitant alcalin pour la formation de pigment à l'oxyde de fer.

## Claim

A process for the production of iron oxide pigments and substantially iron-free sodium sulphate by passing an oxygen-containing gas, in particular air, through sodium-alkalized iron-sulphate-containing solutions at temperatures of above 40°C to about 100°C, the iron oxide pigment formed being separated from the sodium sulphate-containing solution, characterized in that in a first crystallization step a part of the sodium sulphate is allowed to crystallize out from the solids-free solution in the form of sodium sulphate decahydrate and is separated from the sodium-sulphate-containing mother liquor, part of the sodium-sulphate-containing mother liquor is used for dissolving solid iron sulphate heptahydrate, further sodium sulphate decahydrate is crystallized from the remainder of the mother liquor by the addition of sodium hydroxide and separated off, after which the sodium-sulphate- and alkali-containing aqueous solution formed is used as an alkaline precipitant for the formation of iron oxide pigment.